Europäisches Patentamt

European Patent Office

Office européen des brevets

(19)

(11) EP 1 447 938 A2

(12) EUROPEAN PATENT APPLICATION

(43) Date of publication:
18.08.2004 Bulletin 2004/34

(51) Int Cl.7: H04L 12/28

(21) Application number: 04003310.2

(22) Date of filing: 13.02.2004

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 15.02.2003 KR 2003009665

(71) Applicant: Samsung Electronics Co., Ltd.
Suwon-city, Gyeonggi-do (KR)

(72) Inventors:
• Lee, Ju-Ho
Yeongtong-gu Suwon-si Gyeonggi-do (KR)

• Kwak, Yong-Jun
Yeongtong-gu Suwon-si Gyeonggi-do (KR)
• Choi, Sung-Ho
Yeongtong-gu Suwon-si Gyeonggi-do (KR)
• Heo, Youn-Hyoung
Yeongtong-gu Suwon-si Gyeonggi-do (KR)
• Kim, Young-Bum
Yeongtong-gu Suwon-si Gyeonggi-do (KR)

(74) Representative: Grünecker, Kinkeldey,
Stockmair & Schwanhäusser Anwaltssozietät
Maximilianstrasse 58
80538 München (DE)

(54) Scheduling apparatus and method in a CDMA mobile communication system

(57)    A system and method for transmitting packet data from a user equipment (UE) in a soft handover region to Node Bs in a code division multiple access (CDMA) mobile communication system. Scheduling is performed such that although the UE using an Enhanced Uplink Dedicated transport Channel (EUDCH) service in a soft handover region receives different scheduling commands from a plurality of active Node Bs, the EUDCH service can be performed in an optimal radio environment, contributing to improvement in data reception performance.

FIG.8

**Description**

**BACKGROUND OF THE INVENTION**

1. Field of the Invention

The present invention relates generally to a Node B scheduling apparatus and method in an asynchronous Code Division Multiple Access (CDMA) mobile communication system serving an Enhanced Uplink Dedicated transport Channel (EUDCH), and in particular, to a Node B scheduling apparatus and method for a user equipment (UE) located in a soft handover region.

2. Description of the Related Art

In general, a data rate for an uplink channel is determined by a UE within the upper limit of a predetermined possible data rate. The upper limit of a data rate is provided to the UE by a radio network controller (RNC). That is, a data rate for an existing uplink channel is not controlled by a Node B. However, in an Enhanced Uplink Dedicated transport Channel (EUDCH), whether to transmit uplink data and the upper limit of its available data rate is determined by a Node B. The determined information is transmitted to a UE as a scheduling command. The UE determines a data rate for the EUDCH according to the scheduling command. Here, the EUDCH is an uplink channel proposed to enhance transmission performance of uplink packets in an asynchronous Code Division Multiple Access (CDMA) mobile communication system.

Uplink signals transmitted from different UEs over such uplink channels are not orthogonal with one another due to asynchronicity between them. Therefore, the uplink signals act as interferences to one another. This implies that an increase in a number of uplink signals that a Node B receives causes an increase in interference to an uplink signal from a particular UE, thereby deteriorating reception performance. This problem can be solved by increasing transmission power of a particular uplink channel. However, increasing transmission power of a particular uplink channel acts as interference to uplink signals transmitted over other uplink channels, causing deterioration in reception performance. Due to such a phenomenon, the number of uplink channel signals that a Node B can receive while guaranteeing reception performance is limited. This can be explained using Rise-Over-Thermal (ROT) as defined in Equation (1).

$$ROT = I_o/N_o \hspace{4cm} (1)$$

In Equation (1), $I_o$ denotes power spectral density for the entire reception bandwidth of a Node B, and $N_o$ denotes power spectral density for thermal noises of the Node B. That is, the ROT defmed in Equation (1) represents radio resources that a Node B can assign for a packet data service through EUDCH.

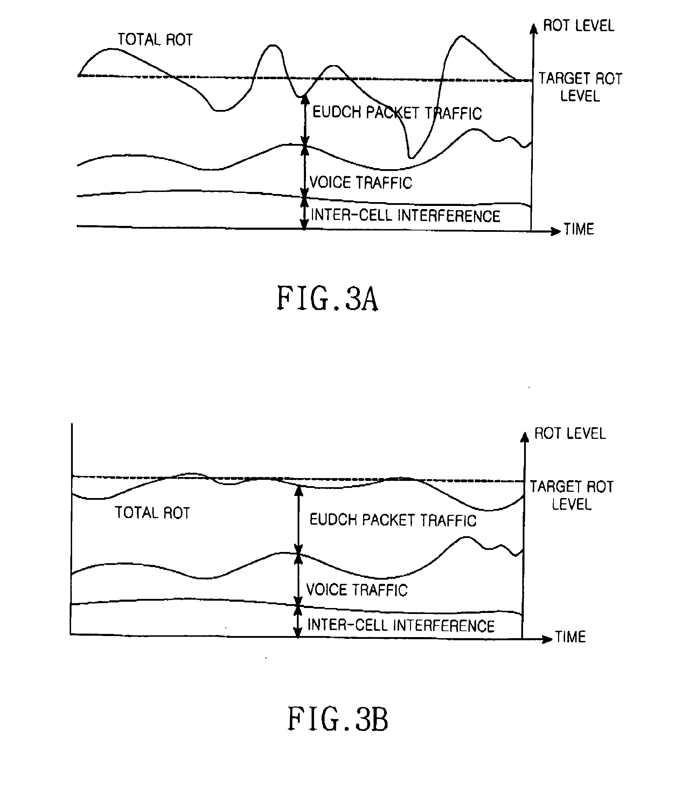

Examples of a measured ROT that a Node B receives are illustrated in FIGs. 3A and 3B. More specifically, FIG. 3A is a diagram illustrating variations in a measured ROT when Node B scheduling is not served in an asynchronous CDMA mobile communication system supporting EUDCH, and FIG. 3B is a diagram illustrating variations in a measured ROT when Node B scheduling is served in an asynchronous CDMA mobile communication system supporting EUDCH.

The measured ROT illustrated in FIGs. 3A and 3B can be represented by the sum of inter-cell interference, voice traffic, and packet traffic received over EUDCH (hereinafter referred to as "EUDCH packet traffic").

In FIG. 3A, where scheduling is not performed on EUDCH packet traffic, if several UEs simultaneously transmit packet of high data rate at a particular time, a measured ROT may become higher than a target ROT. In this situation, reception performance for signals received over uplink channels cannot be guaranteed.

However, if scheduling is performed on EUDCH packet traffic by a Node B as illustrated in FIG. 3B, it is possible to prevent several UEs from simultaneously transmitting packet of high data rate at a particular time. Therefore, the Node B can always maintain a measured ROT at around a target ROT, guaranteeing desired reception performance. The scheduling performed in a Node B (hereinafter referred to as "Node B scheduling") refers to scheduling data rates of UEs so as to prevent a phenomenon in which a measured ROT exceeds a target ROT. For example, if a Node B allows a particular UE a high data rate, it does not allow other UEs the high data rate.

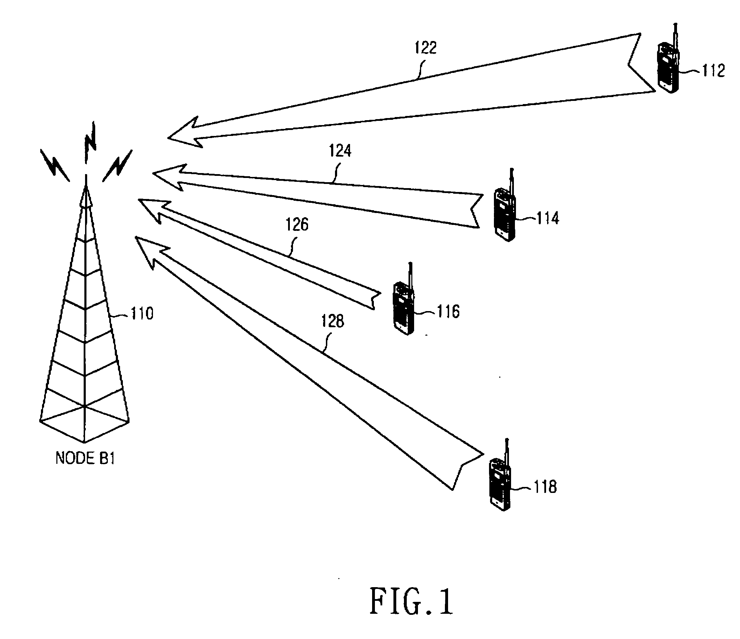

FIG. 1 is a diagram illustrating Node B scheduling based on a EUDCH service in an asynchronous CDMA mobile communication system. Referring to FIG. 1, a Node B 110 is one of active Node Bs supporting a data packet service based on EUDCH, and UEs 112, 114, 116, and 118 are UEs that transmit data packets to the Node B 110 over their EUDCHs. Reference numerals 122, 124, 126, and 128 represent EUDCHs over which the UEs 112, 114 116, and 118 transmit data packets at data rates determined by Node B scheduling.

Generally, if a data rate used for a UE is increased, reception power of a Node B is increased correspondingly due to a signal received from the UE. /However, if a data rate used for a UE is decreased, reception power of a Node B is decreased correspondingly due to a signal received from the UE. As a result, a signal from a UE using a high data rate has a large influence on a measured ROT of a Node B, and a signal from a UE using a relatively low data rate has a small influence on a measured ROT of a Node B. That is, an increase in a data rate causes an increase in a measured ROT, i.e., a portion occupied by uplink radio resources. A Node B performs scheduling on EUDCH packet data considering the relation between data rates and radio resources, and a data rate requested by a UE.

The Node B 110 informs each UE whether EUDCH data transmission is available by utilizing requested data rates of UEs or channel status information, or performs a scheduling operation for controlling EUDCH data rates. The Node B scheduling assigns a far UE with a low data rate and a close UE with a high data rate, and prevents a measured ROT level from exceeding a target ROT level in order to increase the entire system performance.

In FIG. 1, the UEs 112, 114, 116, and 118 are different distances from the Node B 110. The distance between the Node B 110 and the UE 116 is shortest, and the distance between the Node B 110 and the UE 112 is longest. In this regard, in FIG. 1, transmission powers used by the UEs 112, 114, 116, and 118, having different values according to the distances from the Node B 110, are represented by the thickness of arrows 122, 124, 126, and 128. Transmission power of EUDCH from the UE 116 being closest to the Node B 110 is lowest as can be noted from thickness of the arrow 126, i.e., arrow 126 being the thinnest, and transmission power of EUDCH from the UE 112 being farthest from the Node B 110 is highest as can be noted from thickness of the arrow 122, i.e., arrow 122 being the thickest. Therefore, in order to obtain highest performance while maintaining the same ROT and reducing inter-cell interference with other cells, the Node B 110 performs scheduling in such a manner that a transmission power level should be in inverse proportion to a data rate. That is, the scheduling is performed so the highest data rate is assigned to the UE 116 having the lowest uplink transmission power due to the shortest distance from the Node B 110, and the lowest data rate is assigned to the UE 112 having the highest uplink transmission power due to the longest distance from the Node B 110.

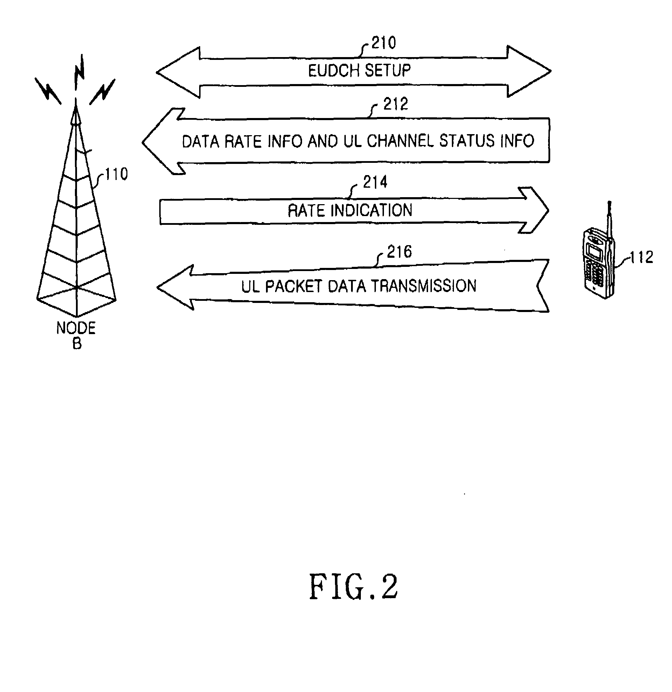

FIG. 2 is a diagram illustrating a signaling procedure between a Node B and a UE for a EUDCH service in an asynchronous CDMA mobile communication system. It is assumed that the signaling in FIG. 2 corresponds to signaling between the Node B 110 and the UE 112 illustrated in FIG. 1.

Referring to FIG. 2, in step 210, a EUDCH setup procedure for a EUDCH service is performed between the Node B 110 and the UE 112. The EUDCH setup procedure includes transmitting/receiving messages over a dedicated transport channel. When the EUDCH setup procedure is completed, in step 212, the UE 112 transmits information on a required data rate and information indicating an uplink channel status, to the Node B 110. The uplink channel status information includes transmission power and transmission power margin of an uplink channel.

The Node B 110 receiving information on the transmission power of the uplink channel can estimate a downlink channel status by comparing the transmission power of the uplink channel with reception power thereof. If a difference between the transmission power and the reception power is small, it is estimated that the downlink channel has a good channel status, and if a difference between the transmission power and the reception power is large, it is estimated that the downlink channel has a poor channel status.

When a transmission power margin is transmitted as the uplink channel status information, the Node B 110 can estimate transmission power of an uplink channel by subtracting the transmission power margin from previously-known possible maximum transmission power of the UE 112. The Node B 110 determines a maximum data rate supportable through EUDCH depending on the estimated channel status and information on a data arte required by the UE 112. In step 214, the Node B provides the determined maximum data rate to the UE 112. In response, the UE 112 determines a data rate of packet data to be transmitted over EUDCH within the maximum data rate, and in step 216, transmits packet data to the Node B 110 at the determined data rate.

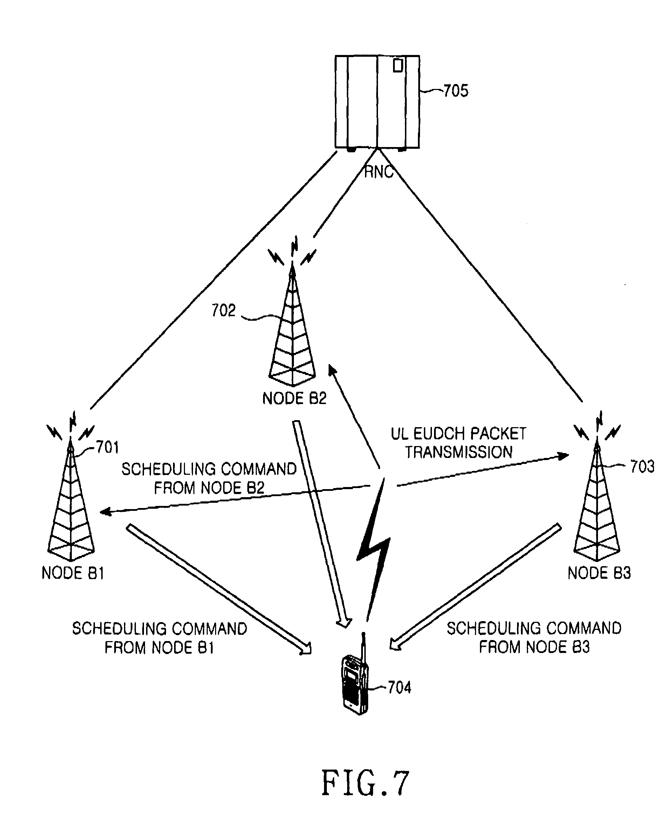

FIG. 7 is a diagram illustrating an asynchronous CDMA mobile communication system supporting EUDCH, wherein a UE is located in a soft handover (SHO) region. Referring to FIG. 7, data transmitted from a UE 704 located in a soft handover region is transmitted to a plurality of active Node Bs 701, 702, and 703 associated with the soft handover region. Among the active Node Bs 701, 702, and 703, a Node B that succeeded in demodulating data received from the UE 704 without error transmits the demodulated data to an RNC 705. Therefore, the RNC 705 receives the same data through a plurality of Node Bs, obtaining macro selection diversity gain. Such an operation in a soft handover state has been widely used in existing cellular wireless communication systems, and can also be equally applied to a EUDCH service.

When the operation in the soft handover region is applied to a EUDCH service, EUDCH packet data transmitted from the UE 704 is received at each of the active Node Bs 701, 702, and 703. If the active Node Bs 701, 702, and 703 succeed in receiving the EUDCH packet data without error, they transmit the received data to the RNC 705. The RNC 705, because it receives the same data through a plurality of Node Bs as stated above, can secure required EUDCH packet data reception performance while maintaining possible low transmission power of an uplink channel.

In order for the several active Node Bs to receive EUDCH packet data as described above, each of the active Node Bs must perform a scheduling operation considering a data rate requested by a UE and an uplink channel status. However, because each of the active Node Bs cannot know ROTs of other active Node Bs, the active Node Bs 701, 702, and 703 may transmit different scheduling commands to the UE 704. For example, even though the Node B 701 allowed the UE 704 data transmission at 100 Kbps, the UE 704 may not be guaranteed 100-Kbps data reception performance by the Node Bs 702 and 703. Therefore, a need exists for a scheduling method for improving performance of a EUDCH system, when a UE receives different scheduling commands from a plurality of Node Bs.

**SUMMARY OF THE INVENTION**

It is, therefore, an object of the present invention to provide an apparatus and method for efficiently performing an Enhanced Uplink Dedicated transport Channel (EUDCH) service in a UE according to scheduling commands received from a plurality of active Node Bs.

It is another object of the present invention to provide a scheduling apparatus and method for efficiently performing Node B-controlled scheduling based on EUDCH, when a UE located in a soft handover region receives different scheduling commands from a plurality of active Node Bs.

It is further another object of the present invention to provide an apparatus and method for scheduling a data rate to be used for EUDCH in a UE located in a soft handover region.

It is yet another object of the present invention to provide an apparatus and method for previously determining parameters necessary for implementing scheduling on a UE located in a soft handover region, and providing the determined parameters to the UE.

It is still another object of the present invention to provide an apparatus and method for efficiently performing Node B scheduling when a UE located in a soft handover region receives different scheduling commands from active Node Bs, in order to improve performance of an EUDCH system.

In accordance with a first aspect of the present invention, there is provided a method for transmitting packet data from a user equipment (UE) in a soft handover region to Node Bs in a code division multiple access (CDMA) mobile communication system including a plurality of the Node Bs being adjacent to each another, and the UE located in the soft handover region occupied by the Node Bs. The method comprises: receiving scheduling commands transmitted from the Node Bs; and determining scheduling control information by combining scheduling commands based on weighting factors previously, individually determined for the scheduling commands, and transmitting packet data to the Node Bs according to the scheduling control information.

In accordance with a second aspect of the present invention, there is provided an apparatus for transmitting packet data from a user equipment (UE) in a soft handover region to Node Bs in a code division multiple access (CDMA) mobile communication system including a plurality of the Node Bs being adjacent to each another, and the UE located in the soft handover region occupied by the Node Bs. The apparatus comprises: a scheduling command combiner for receiving scheduling commands transmitted from the Node Bs, and determining scheduling control information by combining scheduling commands based on weighting factors previously individually determined for the scheduling commands; and a packet transmitter for transmitting packet data to the Node Bs according to the scheduling control information.

In accordance with a third aspect of the present invention, there is provided a method for applying a weighting factor for each cell by a radio network controller (RNC) that manages cells so that a user equipment (UE) located in a soft handover region can transmit packet data according to scheduling commands from the cells considering weighting factors, in a code division multiple access (CDMA) mobile communication system including a plurality of the cells being adjacent to one another, and the UE located in the soft handover region occupied by the cells. The method comprises: calculating weighting factors that are in inverse proportion to a radius $r_i$ of each of the cells, and are in proportion to a particular value k; and transmitting the weighting factors individually calculated for the cells to the UE through a radio resource control (RRC) message.

In accordance with a fourth aspect of the present invention, there is provided a method for applying a weighting factor for each cell by a radio network controller (RNC) that manages cells so that a user equipment (UE) located in a soft handover region can transmit packet data according to scheduling commands from the cells considering weighting factors, in a code division multiple access (CDMA) mobile communication system including a plurality of the cells being adjacent to one another, and the UE located in the soft handover region occupied by the cells. The method comprises: receiving from the UE a path loss $\gamma_1$, which is determined based on strength of a common pilot signal measured for each cell; calculating weighting factors that are in inverse proportion to a path loss $\gamma_1$ of each cell and are in proportion to a particular value k; and transmitting the weighting factors individually calculated for the cells to the UE through an RRC message.

**BRIEF DESCRIPTION OF THE DRAWINGS**

The above and other objects, features, and advantages of the present invention will become more apparent from the following detailed description when taken in conjunction with the accompanying drawings in which:

FIG. 1 is a diagram illustrating Node B scheduling based on an Enhanced Uplink Dedicated transport Channel (EUDCH) service in an asynchronous CDMA mobile communication system;

FIG. 2 is a diagram illustrating a signaling procedure between a Node B and a UE for a EUDCH service in an asynchronous CDMA mobile communication system;

FIG. 3A is a diagram illustrating variations in a measured ROT (Rise Over Thermal) when Node B scheduling is not provided in an asynchronous CDMA mobile communication system supporting EUDCH;

FIG. 3B is a diagram illustrating variation in a measured ROT when Node B scheduling is provided in an asynchronous CDMA mobile communication system supporting EUDCH;

FIG. 4 is a block diagram illustrating a structure of a transmission apparatus for a UE in an asynchronous CDMA mobile communication system supporting EUDCH;

FIG. 5 is a diagram illustrating an example of a scheduling control message for transmitting a scheduling command of a EUDCH;

FIG. 6 is a block diagram illustrating a transmission apparatus for a Node B in an asynchronous CDMA mobile communication system supporting EUDCH;

FIG. 7 is a diagram illustrating an asynchronous CDMA mobile communication system supporting EUDCH, wherein a UE is located in a soft handover region;

FIG. 8 is a block diagram illustrating an additionally required structure in a transmission apparatus for a UE supporting EUDCH according to an embodiment of the present invention;

FIG. 9 is a block diagram illustrating an example of the scheduling command combiner illustrated in FIG. 8;

FIG. 10 is a flowchart illustrating a control procedure by the scheduling command combiner illustrated in FIG. 9;

FIG. 11 is a block diagram illustrating another example of the scheduling command combiner illustrated in FIG. 8;

FIG. 12 is a flowchart illustrating a control procedure by the scheduling command combiner illustrated in FIG. 11;

FIG. 13 is a block diagram illustrating further another example of the scheduling command combiner illustrated in FIG. 8; and

FIG. 14 is a flowchart illustrating a control procedure by the scheduling command combiner illustrated in FIG. 13.

**DETAILED DESCRIPTION OF THE PREFERRED EMBODIMENT**

Preferred embodiments of the present invention will now be described in detail herein below with reference to the annexed drawings. In the drawings, the same or similar elements are denoted by the same reference numerals even though they are depicted in different drawings. In the following description, a detailed description of known functions and configurations incorporated herein has been omitted for conciseness.

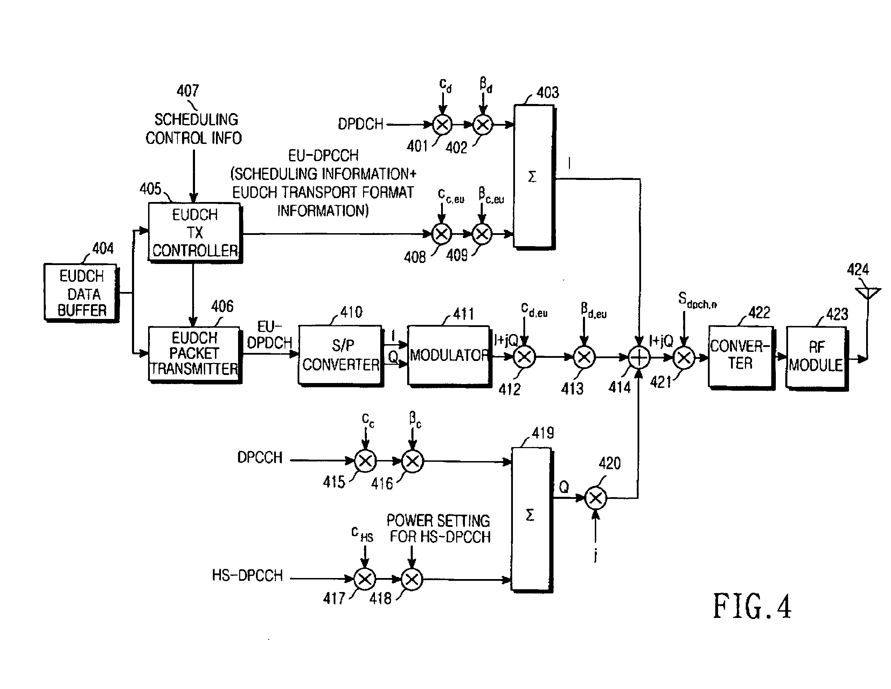

FIG. 4 is a block diagram illustrating a transmission apparatus for a UE in an asynchronous CDMA mobile communication system supporting EUDCH.

An uplink physical channel used system illustrated in FIG. 1 comprises a dedicated physical data channel (DPDCH), a dedicated physical control channel (DPCCH), a high speed dedicated physical control channel (HS-DPCCH), and a EUDCH. The HS-DPCCH is a dedicated physical control channel for a High Speed Downlink Packet Access (HSDPA) service. The EUDCH is a channel for an enhanced uplink data packet service (EUDCH service), and is comprised of an enhanced uplink dedicated physical control channel (EU-DPCCH) and an enhanced uplink dedicated physical data channel (EU-DPDCH). The EU-DPCCH is a dedicated physical control channel for a EUDCH service, and transmits scheduling information, such as a data rate needed by a UE and information (uplink transmission power or uplink transmission power margin) necessary by a Node B for estimating an uplink channel status. In addition, the EU-DPCCH transmits transport format information of EUDCH packet data transmitted over the EU-DPDCH. The EU-DPDCH is a dedicated physical data channel for a EUDCH service, and transmits packet data at a data rate determined according to a scheduling command from a Node B.

Conventionally, the DPDCH supports only BPSK (Binary Phase Shift Keying) modulation scheme. However, the EU-DPDCH can use QPSK (Quadrature Phase Shift Keying) and 8PSK (8-ary Phase Shift Keying) in addition to BPSK as a modulation scheme in order to increase a data rate without increasing the number of spreading codes that can be simultaneously transmitted.

Referring to FIG. 4, a EUDCH transmission (Tx) controller 405 determines a data rate $R_{req}$ requested by a UE and a transport format of EUDCH packet data, and transmits the determined information to a Node B over EU-DPCCH. The $R_{req}$ can be determined by Equation (2) considering a lump (amount) $L_{data}$ of data currently buffered in a EUDCH data buffer 404 and an allowed transmission delay time $T_{delay}$.

$$R_{req} = L_{data} / T_{delay} \qquad (2)$$

If packet data is continuously transmitted at the $R_{req}$ calculated by Equation (2), the data currently buffered in the EUDCH data buffer 404 can be transmitted for the allowed delay time $T_{delay}$. The transport format of EUDCH packet data can be determined so that EUDCH packet data can be transmitted at the maximum data rate allowed by scheduling control information 407 received from a Node B. The calculated $R_{req}$ is applied to a EUDCH packet transmitter 406. The EUDCH packet transmitter 406 reads an amount of data, designated by the transport format of EUDCH packet data, from the EUDCH data buffer 404, performs channel-coding and modulation on the read data according to a modulation scheme and a channel coding rate designated by the transport format of EUDCH packet data, and transmits the modulated data to a Node B over EU-DPDCH.

The $R_{req}$ calculated by the EUDCH transmission controller 405 is input to a multiplier 408 as a EU-DPCCH signal, and the multiplier 408 spreads the EU-DPCCH signal by an OVSF (Orthogonal Variable Spreading Factor) code $C_{c,eu}$ at a chip rate. The EU-DPCCH signal spread at a chip rate is input to a multiplier 409, which multiplies the spread EU-DPCCH signal by a channel gain $\beta_{c,eu}$, and provides its output to a summer 403.

A DPDCH signal is input to a multiplier 401, and the multiplier 401 multiplies the DPDCH signal by an OVSF code $C_d$ at a chip rate. The DPDCH signal spread at a chip rate is input to a multiplier 402, and the multiplier 402 multiplies the spread DPDCH signal by a channel gain $\beta_d$, and provides its output to the summer 403. The summer 403 sums up the DPDCH signal from the multiplier 402 and the EU-DPCCH signal from the multiplier 409, and assigns its output to an in-phase (I) channel.

When BPSK is used, EU-DPDCH symbols from the EUDCH packet transmitter 406 are assigned to an I channel because they have a real value. However, when QPSK or 8PSK is used, the EU-DPCH symbols are expressed as I+jQ because they are transmitted as complex symbols.

In FIG. 4, it is assumed that the EU-DPDCH symbols are transmitted as complex symbols. Therefore, the EU-DPDCH symbols from the EUDCH packet transmitter 406 are converted into two symbol streams of I and Q symbol streams by a serial-to-parallel (S/P) converter 410, and then modulated into QPSK or 8PSK complex modulation symbols by a modulator 411. A stream of the complex modulation symbols is spread by an OVSF code $C_{d,eu}$ at a chip rate in a multiplier 412, and then multiplied by a channel gain ($\beta_{d,eu}$ in a multiplier 413.

A DPCCH signal is input to a multiplier 415, which spreads the DPCCH signal by an OVSF code $C_c$ at a chip rate. The DPCCH signal spread at a chip rate is input to a multiplier 416, which multiplies the spread DPCCH signal by a channel gain $\beta_c$ and provides its output to a summer 419.

An HS-DPCCH signal is input to a multiplier 417, which spreads the HS-DPCCH signal by an OVSF code $C_{HS}$ at a chip rate. The HS-DPCCH signal spread at a chip rate is input to a multiplier 418, which multiplies the spread HS-DPCCH signal by a power setting value for HS-DPCCH and provides its output to the summer 419. The summer 419 sums up the DPCCH signal from the multiplier 416 and the HS-DPCCH signal from the multiplier 418. The summed signal is multiplied by j in a multiplier 420, so that the summed signal is converted into an imaginary value and assigned to a quadrature-phase (Q) channel.

The real output of the summer 403, the complex output of the multiplier 413, and the imaginary output of the multiplier 420 are added up in an adder 414, forming one stream of complex symbols. The one symbol of complex symbols is scrambled by a scrambling code $S_{dpch,n}$ in a multiplier 421. The scrambled complex symbol stream is converted into pulse signal by a converter 422. The converted pulse signals is modulated into a radio frequency (RF) signal by an RF module 423, and then transmitted to a Node B via an antenna 424.

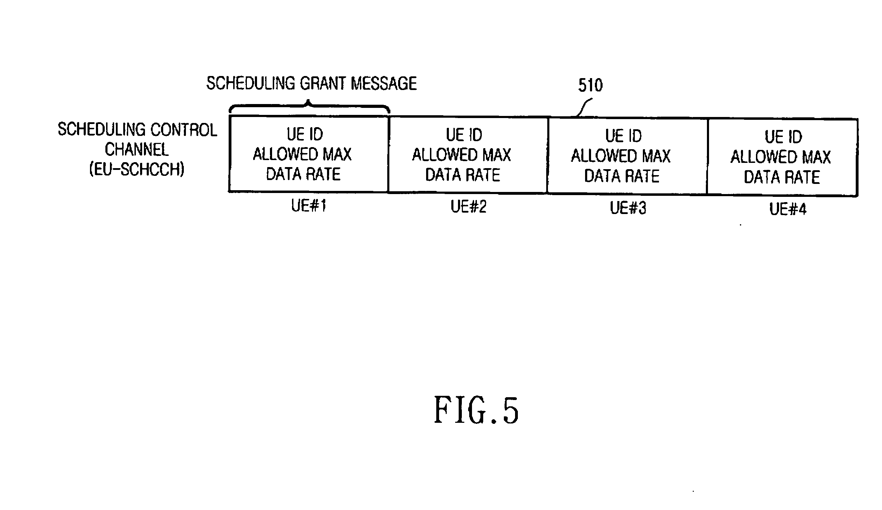

FIG. 5 is a diagram illustrating an example of a scheduling control message for transmitting a scheduling command of a EUDCH. Referring to FIG 5, a scheduling control channel (EU-SCHCCH) 510 transmits scheduling grant messages of UEs. The scheduling grant message includes scheduling control information for a scheduling-enabled UE. The EU-SCHCCH informs several UEs whether transmission of EUDCH packet data is allowed, using one OVSF code, and the scheduling control information includes an allowed maximum data rate. The scheduling control information of each UE can be distinguished by transmitting a UE identifier (ID) for identifying a UE along with the scheduling grant message.

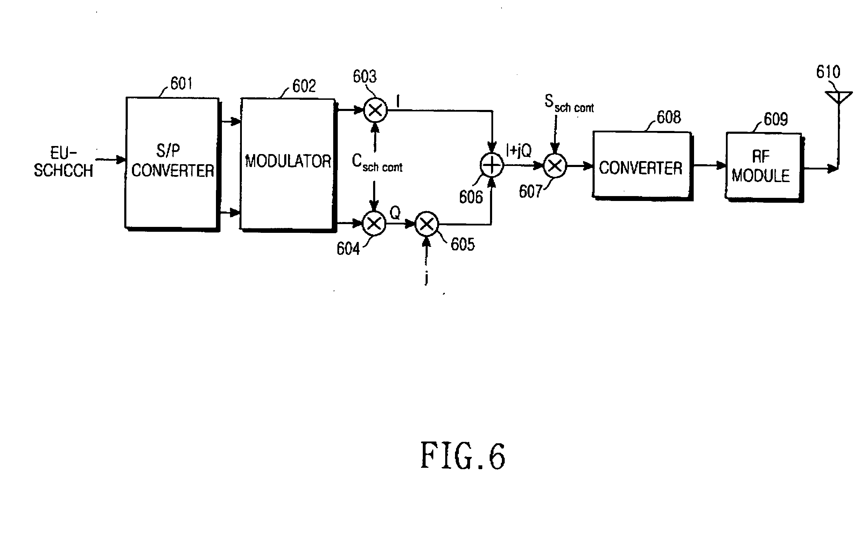

FIG. 6 is a block diagram illustrating a structure of a transmission apparatus for a Node B in an asynchronous CDMA mobile communication system supporting EUDCH. Referring to FIG. 6, EU-SCHCCH data illustrated in FIG. 5 is converted into two data streams by a serial-to-parallel (S/P) converter 601, and then provided to a modulator 602. The modulator 602 separately modulates the two data streams according to a predetermined modulation scheme, and outputs a modulation data stream corresponding to an I channel and a modulation data stream corresponding to a Q channel. For example, QPSK can be used as the predetermined modulation scheme.

The modulation data stream corresponding to an I channel is spread by an OVSF code $C_{sch\_cont}$ at a chip rate in a multiplier 603. The modulation data stream corresponding to a Q channel is spread by the OVSF code $C_{sch\_cont}$

at a chip rate in a multiplier 604, and then multiplied by j in a multiplier 605, generating an imaginary modulation data stream. The two modulation data streams output from the multiplier 603 and the multiplier 605 are added up by an adder 606, generating one complex modulation data stream. The complex modulation data stream is scrambled by a scrambling code $S_{sch\_cont}$ in a multiplier 607. The scrambled complex symbol stream is converted into pulse signals by a converter 608. The converted pulse signals are modulated into an RF signal by an RF module 609, and then transmitted to a UE via an antenna 610.

As illustrated in FIG. 7, if a UE is located in a soft handover region and each of active Node Bs performs a scheduling operation, the UE may receive different scheduling commands from the active Node Bs. An example available in the situation shown in FIG. 7 will be described herein below.

- Node B#1 701: it allows packet data transmission at a maximum data rate of 100 Kbps.
- Node B#2 702: it prohibits transmission of packet data.
- Node B#3 703: it allows packet data transmission at a maximum data rate of 50 Kbps.
      In this example, an operation a UE can perform upon receiving a plurality of scheduling commands can be divided into offensive scheduling and negative scheduling. A detailed description thereof will be given below.
- Offensive Scheduling: a UE determines a data rate according to the most advantageous scheduling command, or a command capable of transmitting the largest amount of packet data, and transmits packet data at the determined data rate. Therefore, in the above example, the UE transmits packet data at a data rate of 100 Kbps according to a scheduling command from the Node B#1 701.
- Negative Scheduling: a UE determines a data rate according to the most disadvantageous scheduling command among a plurality of scheduling commands, and transmits packet data at the determined data rate.

In the above example, the UE transmits no packet data according to a scheduling command from the Node B#2 702. The Node B#2 702 prohibits transmission of packet data because a measured ROT exceeds a target ROT, or an allowable ROT, when it assigns a particular data rate to the UE. That is, if a UE transmits packet data, not only reception performance for the packet data cannot be guaranteed, but also reception performance for packet data currently received from other UEs is also deteriorated. In order to prevent considerable performance deterioration in any active Node B due to an increase in a measured ROT because of the transmission of packet data by the UE, the UE determines a data rate allowing transmission of the smallest amount of packet data (i.e., the most disadvantageous scheduling command) and transmits packet data at the determined data rate.

The offensive scheduling can increase utilization of ROT, which is an uplink resource, because packet data transmission is always performed according to the most advantageous scheduling command. However, reception performance may be deteriorated because of an increase in a ROT that a Node B failed to expect. However, the negative scheduling can prevent deterioration of reception performance because a UE transmits packet data according to the most disadvantageous scheduling command so a ROT is always lower than a value expected by a Node B. Although, disadvantageously, the negative scheduling cannot sufficiently utilize the ROT which is a limited uplink channel resource, wasting the ROT resource.

The present invention provides an apparatus and method for combining different scheduling commands transmitted from several active Node Bs when a UE is located in a soft handover region in order to solve the problems of the offensive scheduling technique and the negative scheduling technique, thereby improving performance of a EUDCH system.

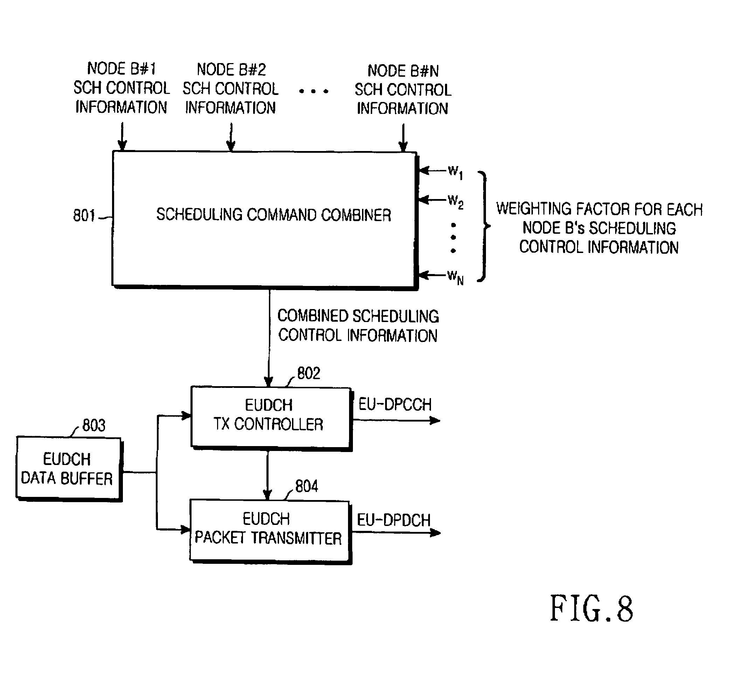

FIG. 8 is a block diagram illustrating an additionally required structure in a transmission apparatus for a UE supporting EUDCH according to an embodiment of the present invention. Because modulation and spreading by an OVSF code in the transmission apparatus for a UE illustrated in FIG. 4 can be equally applied even in an embodiment of the present invention, corresponding components are omitted from FIG. 8.

Referring to FIG. 8, when a UE is located in a soft handover region formed by N active Node Bs, scheduling commands from the active Node Bs are provided to a scheduling command combiner 801. The scheduling command combiner 801 applies different weighting factors $w_n$ to the scheduling commands from the active Node Bs, combines the scheduling commands, levels of which are controlled by the weighting factors $w_n$, and outputs combined scheduling control information. The weighting factors $w_n$ are separately assigned to the active Node Bs. The weighting factor $w_n$ (n=1, 2, ..., N) for each active Node B can be determined by an RNC considering a physical position of each active Node B and its cell size in a soft handover region where a UE is located.

For example, when a particular active Node B#m is smaller in cell size than other active Node Bs, an increment in a reception ROT in the Node B#m due to transmission of EUDCH packet data can be larger than increments in reception ROTs in the other Node Bs. In this case, because the entire performance deterioration may be increased in the Node B#m due to the unexpected EUDCH packet transmission, an RNC can apply a higher weighting factor to scheduling control information of the Node B#m.

An example of calculating the weighting factors according to a cell size as stated above will be described below.

When a UE communicates with N active cells each having a cell radius $r_i$ (i=1, 2, ..., N) in a soft handover region, a weighting factor $w_i$ of each active cell can be calculated by $w_i=k/r_i$ in order to apply a higher weighing factor to a scheduling command from a cell having a smaller cell size as described above. Here, k is defined such that

$$\sum_{i=1}^{N} k / r_i = 1.$$

In another example of calculating a weighting factor for each active cell, a UE measures signal strength of a common pilot signal from each active cell, and reports the measured signal strength or a path loss to an RNC. The RNC can determine a weighting factor $w_i$ for each active cell by $w_i=k/\gamma_i$ using an estimated path loss $\gamma_i$ of each active cell. A decrease in a path loss causes an increase in a reception ROT in a cell due to EUDCH packet data transmitted from a UE. That is, deterioration in reception performance occurring as ROT exceeds a value expected by a Node B's scheduler due to unexpected transmission of EUDCH packet data is increased for a cell having a smaller path loss. Therefore, in order to minimize deterioration in reception performance, a weighting factor for each active cell is determined such that it is proportional to a reciprocal of a path loss as described above. That is, a higher weighting factor is set for a cell having a smaller path loss. In this case, k is set such that

$$\sum_{i=1}^{N} k / \gamma_i = 1.$$

The scheduling control information is provided to a EUDCH transmission controller 802. The EUDCH transmission controller 802 determines a EUDCH transport format using a current status of a EUDCH data buffer 803, where EUDCH data is temporarily stored, and the scheduling control information, and transmits the determined information to the active Node Bs over EU-DPCCH.
In addition, the EUDCH transport format is provided to a EUDCH packet transmitter 804. The EUDCH packet transmitter 804 reads EUDCH data stored in the EUDCH data buffer 803, reconfigures the EUDCH data according to the EUDCH transport format, and then transmits the reconfigured EUDCH data to the active Node Bs over EU-DPDCH.
Preferred embodiments of the present invention will now be described in detail herein below with reference to the accompanying drawings. A description of the embodiments will be given based on the scheduling command combiner 801 illustrated in FIG. 8.

First Embodiment

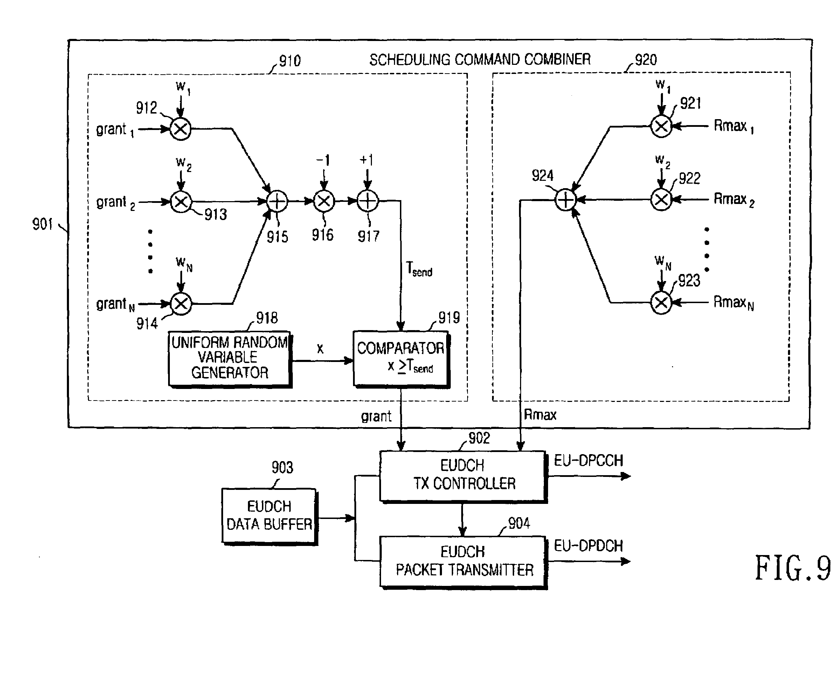

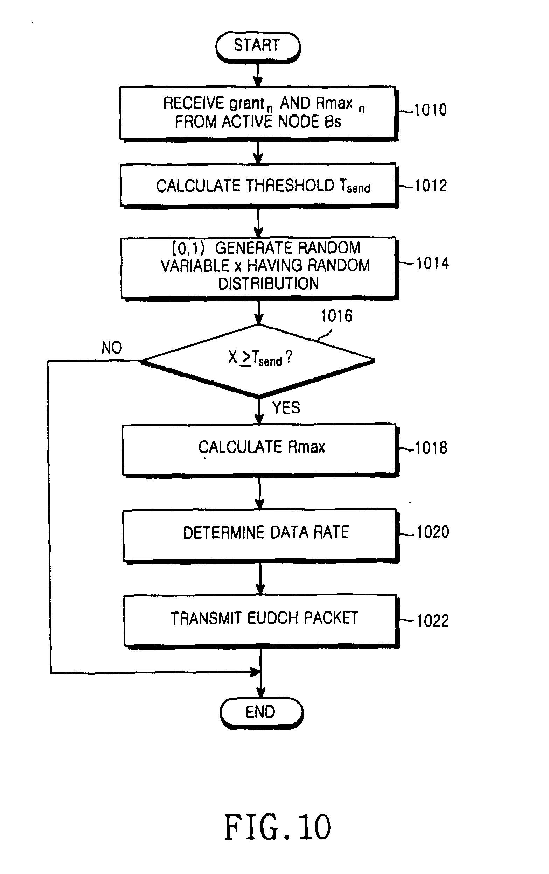

FIG. 9 is a block diagram illustrating an example of the scheduling command combiner illustrated in FIG. 8, and FIG. 10 is a flowchart illustrating a control procedure by the scheduling command combiner illustrated in FIG. 9. That is, FIGs. 9 and 10 illustrate a UE apparatus and method for an embodiment applicable when a Node B transmits EUDCH packet transmission allowability and an allowable maximum data rate to a UE as scheduling control information. The EUDCH packet transmission allowability can be substituted for information indicating whether there is a scheduling grant message transmitted to a corresponding UE. That is, if there is a scheduling grant message transmitted to a corresponding UE, the UE determines that EUDCH packet transmission is allowed. Otherwise, the UE determines that EUDCH packet transmission is not allowed.
In FIG. 9, a parameter $grant_n$ is a scheduling grant value indicating whether there is a scheduling grant message transmitted to a corresponding UE by a Node B#n. For example, when the Node B#n allows EUDCH packet transmission, $grant_n=1$, and when the Node B#n prohibits EUDCH packet transmission, $grant_n=0$. A parameter $w_n$ is a weighting factor for scheduling control information of the Node B#n, and a parameter $Rmax_n$ means a maximum data rate allowable by the Node B#n. Generally, because an increase in a data rate requires higher transmission power, it is possible to inform a UE of allowable maximum transmission power instead of an allowable maximum data rate so that the UE calculates an allowable maximum data rate.
Referring to FIG. 9, a scheduling command combiner 901 combines scheduling commands received from active Node Bs into scheduling control information using weighting factors $w_1$, $w_2$, ..., $w_N$. The weighting factors should satisfy a condition of

$$\sum_{n=1}^{N} w_n = 1.$$

The scheduling command combiner 901 is divided into a grant value generator 910 and a maximum data rate generator 920. The grant value generator 910 combines scheduling grant values received from active Node Bs, and outputs a fmal grant value 'grant'to a EUDCH transmission controller 902. The maximum data rate generator 920 combines allowable maximum data rates received from the active Node Bs, and outputs a final allowable maximum data rate '$R_{max}$' to the EUDCH transmission controller 902.

The EUDCH transmission controller 902 controls a EUDCH packet transmitter 904 so that it transmits EUDCH packet for 'grant=1' and does not transmit EUDCH packet for 'grant=0'. When 'grant=1' the EUDCH transmission controller 902 determines a EUDCH transport format having a maximum data rate $R_{max}$ while considering a status of a EUDCH data buffer 903, and applies the determined EUDCH transport format to the EUDCH packet transmitter 904. The EUDCH transport format is also transmitted to the active Node Bs over EU-DPCCH. The EUDCH packet transmitter 904 reads a designated amount of data from the EUDCH data buffer 903 according to the EUDCH transport format, and transmits the read data to the active Node Bs over EU-DPDCH after channel coding and modulation.

A detailed description will now be made of the grant value generator 910 for calculating 'grant' and the maximum data rate generator 920 for calculating '$R_{max}$.

In the grant value generator 910, multipliers 912, 913, and 914, the number of which is equal to the number of active Node Bs, multiply scheduling grant values $grant_1$, $grant_1$, ..., $grant_N$ received from active Node B#1, Node B#2, ..., Node B#N by weighting factors $w_1$, $w_2$, ..., $w_N$, respectively, and provide their outputs to an adder 915. The adder 915 outputs a signal $grant_{comb}$ by adding up signals output from the multipliers 912, 913, and 914. The $grant_{comb}$ is multiplied by '-1' in a multiplier 916, and then added to '+1' in an adder 917, thus generating '1-$grant_{comb}$'. The '1-$grant_{comb}$' output from the adder 917 can be represented by a threshold $T_{send}$ as defined in Equation (3).

$$T_{send} = 1 - \sum_{n=1}^{N} w_n \times grant_n \qquad \ldots \ldots \ldots (3)$$

It can be noted that $T_{send}$ calculated by Equation (3) satisfies a condition Of '$0 \le T_{send} \le 1$' .

A uniform random variable generator 918 generates a random variable x ($0 \le x < 1$) having uniform distribution, and provides the generated random variable x to a comparator 919. The comparator 919 compares the random variable x with the $T_{send}$. If the comparison result satisfies a condition of '$x \ge T_{send}$', the comparator 919 outputs 'grant=1' as a final scheduling grant value. However, if the comparison result satisfies a condition of '$x < T_{send}$', the comparator 919 outputs 'grant=0' as a final scheduling grant value. Therefore, as the threshold $T_{send}$ is lower, probability that a UE will transmit EUDCH packet is increased higher. The output 'grant' of the comparator 919 is applied to the EUDCH transmission controller 902.

In the maximum data rate generator 920, maximum data rates $Rmax_1$, $Rmax_2$, ..., $Rmax_N$ received from corresponding active Node Bs are multiplied by weighing factors $w_1$, $w_2$, .., $w_N$, respectively, by multipliers 921, 922, and 923, the number of which is equal to the number of the active Node Bs, and then provided to an adder 924. The adder 924 adds up signals output from the multipliers 921, 922, and 923, and outputs Rmax, as defined by Equation (4).

$$R\max = \sum_{n=1}^{N} w_n \times R\max_n \qquad \ldots \ldots \ldots (4)$$

The Rmax calculated by Equation (4) is applied to the EUDCH transmission controller 902. If a particular Node B#m does not allow EUDCH packet transmission, the maximum data rate generator 920 sets a corresponding $Rmax_m$=0 in calculating the Rmax.

In the above transmission apparatus for a UE, if it is desired to apply a higher weighting factor to scheduling control information of a particular Node B#m, a weighting factor $w_m$ for the particular Node B#m can be increased. When the transmission apparatus illustrated in FIG. 9 is used, in order for EUDCH packet transmission probability of a UE to have a different value for given scheduling control information, a random variable x generated from the uniform random variable generator 918 can have different probability distribution.

For example, if probability that a large random variable x will be generated is increased, EUDCH packet transmission probability is increased. That is, EUDCH packet transmission probability and data rate of a UE for different scheduling commands from the active Node Bs can be controlled by controlling distribution of weighting factors $w_1$, $w_2$, ..., $w_N$ and a random variable x. For example, the weighting factors can be set to either the same value, or different values. In this embodiment, the sum of weighting factors is limited to 1. However, when the sum of weighting factors is k, '+k' is added in the adder 917 and the uniform random variable generator 918 generates a random variable x (0

$\leq$ x < k) having uniform distribution, to perform the procedure described above. For the maximum data rate, if the sum of weighting factors is set to k, a calculated data rate can be obtained by dividing the output value of the adder 924 by k.

In a modified embodiment, if the sum of weighting factors is 1, the uniform random variable generator 918 generates a random variable x ($0 \leq$ x < 1) having uniform distribution and the random variable x can be directly compared with an output value of the adder 915. That is, if x < $T_{send}$, data transmission can be allowed. Also, if the sum of weighting factors is k, the uniform random variable generator 918 generates a random variable x ($0 \leq$ x < k) having uniform distribution and the random variable x is directly compared with an output value of the adder 915. In addition, a calculated data rate can be obtained by dividing an output value of the adder 924 by k.

FIG. 10 is a flowchart illustrating an operation of a UE performed by the transmission apparatus illustrated in FIG. 9. Referring to FIG. 10, in step 1010, a UE receives scheduling grant values $grant_n$ and maximum allowed data rates $Rmax_n$ from active Node Bs. In step 1012, the UE calculates $T_{send}$ by Equation (3). The UE generates a random variable x ($0 \leq$ x 1) having uniform distribution in step 1014, and then compares the uniform random variable x with the $T_{send}$ in step 1016.

If the comparison result satisfies a condition of x < $T_{send}$, the UE does not transmit EUDCH packet. However, if the compassion result satisfies a condition of x $\geq$ $T_{send}$, the UE proceeds to step 1018 where it calculates a maximum allowed data rate Rmax by Equation (4). In step 1020, the UE determines a data rate lower than the Rmax considering a EUDCH buffer status and an allowed delay time. Thereafter, in step 1022, the UE transmits EUDCH packet at the determined data rate.

For an operation of the first embodiment described in connection with FIGS. 9 and 10, an RNC must previously inform the UE of weighting factors $w_1$, $w_2$, ..., $w_N$ for scheduling information of active Node Bs. The $w_1$, $w_2$, ..., $w_N$ can be transmitted along with an RRC (Radio Resource Control) message (e.g., Active Set Update message) transmitted from the RNC to the UE, when the UE enters a soft handover region. Tables 1 and 2 below illustrate an example of a format of an Active Set Update message for transmitting the $w_1$, $w_2$, ..., $w_N$. In Tables 1 and 2, information parameters added for the first embodiment are italicized.

Table 1

| Information Element/ Group name | Need | Multi | Type and reference | Semantics description |
|---|---|---|---|---|
| Message Type | MP | | Message Type | |
| **UE information elements** | | | | |
| RRC transaction identifier | MP | | RRC transaction identifier 10.3.3.36 | |
| Integrity check into | CH | | Integrity check info 10.3.3.16 | |
| Activation time | MD | | Activation time 10.3.3.1 | Default value is 'now'. |
| New U-RNTI | OP | | U-RNTI 10.3.3.47 | |
| **CN information elements** | | | | |
| CN Information info | OP | | CN Information info 10.3.1.3 | |
| **Phy CH information elements** | | | | |
| **Uplink radio resources** | | | | |
| Maximum allowed UL TX power | MD | | Maximum allowed UL TX power 10.3.6.39 | Default value is the existing 'maximum UL TX power. |
| **Downlink radio resources** | | | | |
| Radio link addition information | OP | 1 to <maxRL-1> | | Radio link addition information required for each RL to add |

Table 1   (continued)

| Information Element/ Group name | Need | Multi | Type and reference | Semantics description |
|---|---|---|---|---|
| **Downlink radio resources** | | | | |
| >Radio link addition information | MP | | Radio link addition information 10.3.6.68 | |
| Radio link removal information | OP | 1 to <maxRL> | | Radio link removal information required for each RL to remove |
| >Radio link removal information | MP | | Radio link removal information 10.3.6.69 | |
| TX Diversity Mode | MD | | TX Diversity Mode 10.3.6.86 | Default value is the existing TX diversity mode. |
| SSDT information | OP | | SSDT information 10.3.6.77 | |
| ***EUDCH Information*** | | | | |
| *Weighting factor information* | *OP* | *1 to <maxRL>* | | *Weighting factor information during SHO* |
| *>Weighting factor information* | *MP* | | *Weighting factor information'* | |

Table 2

| *Weighting factor information* | | | | |
|---|---|---|---|---|
| ***Information Element/Group name*** | ***Need*** | ***multi*** | ***Type and reference*** | ***Semantics description*** |
| *Primary CPICH info* | *MP* | | *Primary CPICH info 10.3.6.60* | |
| *Weighting factor* | *MP* | | *Real (b 1 .. b2 by step of b3)* | *weighting factor used for combining of scheduling information* |

Second Embodiment

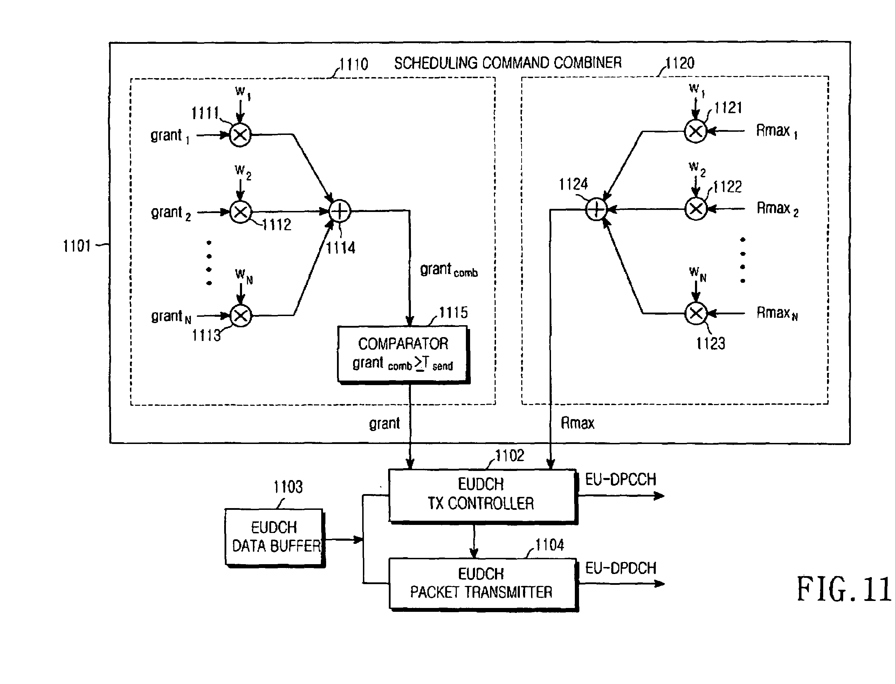

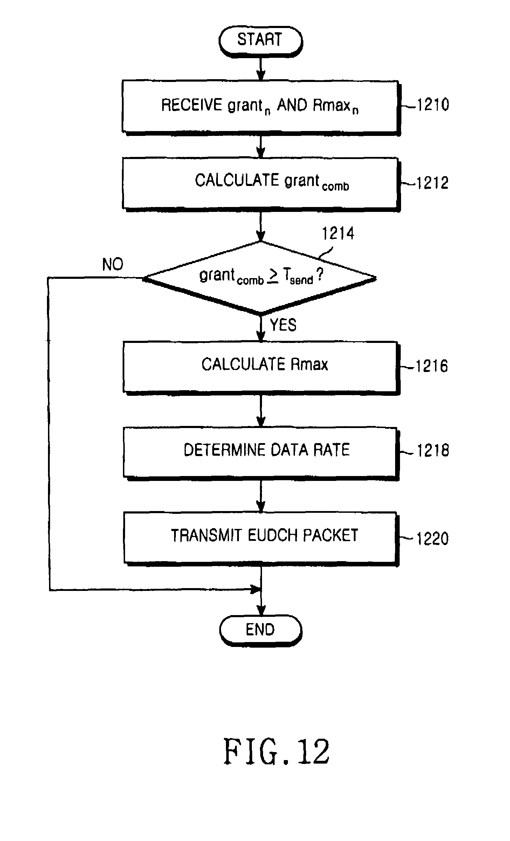

FIG. 11 is a block diagram illustrating another example of the scheduling command combiner illustrated in FIG. 8, and FIG. 12 is a flowchart illustrating a control procedure by the scheduling command combiner illustrated in FIG. 11. That is, FIGs. 11 and 12 illustrate a UE apparatus and method for another embodiment applicable when an active Node B transmits EUDCH packet transmission allowability and an allowable maximum data rate to a UE as a scheduling control command. The EUDCH packet transmission allowability can be substituted for information indicating whether there is a scheduling grant message transmitted to a corresponding UE. That is, if there is a scheduling grant message transmitted to a corresponding UE, the UE determines that EUDCH packet transmission is allowed. Otherwise, the UE determines that EUDCH packet transmission is not allowed.

In FIG. 11, a parameter $grant_n$ is a scheduling grant value indicating whether there is a scheduling grant message transmitted to a corresponding UE by a Node B#n. For example, when the Node B#n allows EUDCH packet transmission, $grant_n=1$, and when the Node B#n prohibits EUDCH packet transmission, $grant_n=0$. A parameter $W_n$ is a weighting factor for scheduling control information of the Node B#n, and a parameter $Rmax_n$ means a maximum data rate allowable by the Node B#n. Generally, because an increase in a data rate requires higher transmission power, it is possible to inform a UE of allowable maximum transmission power instead of an allowable maximum data rate so that the UE calculates an allowable maximum data rate.

Referring to FIG. 11, a scheduling command combiner 1101 combines scheduling commands received from active Node Bs into scheduling control information using weighting factors $w_1$, $w_2$, ..., $w_N$. The weighting factors should satisfy a condition of

$$\sum_{n=1}^{N} w_n = 1.$$

The scheduling command combiner 1101 is divided into a grant value generator 1110 and a maximum data rate generator 1120. The grant value generator 1110 combines scheduling grant values received from active Node Bs, and outputs a final grant value 'grant' to a EUDCH transmission controller 1102. The maximum data rate generator 1120 combines allowable maximum data rates received from the active Node Bs, and outputs a fmal allowable maximum data rate '$R_{max}$' to the EUDCH transmission controller 1102.

The EUDCH transmission controller 1102 controls a EUDCH packet transmitter 1104 so that it transmits EUDCH packet for 'grant=1' and does not transmit EUDCH packet for 'grant=0'. When 'grant=1', the EUDCH transmission controller 1102 determines a EUDCH transport format having a maximum data rate $R_{max}$ while considering a status of a EUDCH data buffer 1103, and applies the determined EUDCH transport format to the EUDCH packet transmitter 1104. The EUDCH transport format is also transmitted to the active Node Bs over EU-DPCCH. The EUDCH packet transmitter 1104 reads a designated amount of data from the EUDCH data buffer 1103 according to the EUDCH transport format, and transmits the read data to the active Node Bs over EU-DPDCH, after channel coding and modulation.

In the grant value generator 1110, multipliers 1111, 1112, and 1113, the number of which is equal to the number of active Node Bs, multiply scheduling grant values $grant_1$, $grant_1$, ..., $grant_N$ received from active Node B#1, Node B#2, ..., Node B#N by weighting factors $w_1$, $w_2$, ..., $w_N$, respectively, and provide their outputs to an adder 1114. The adder 1114 adds up signals output from the multipliers 1111, 1112, and 1113, and outputs a signal $grant_{comb}$ as defined in Equation (5).

$$grant_{comb} = \sum_{n=1}^{N} w_n \times grant_n \qquad \ldots\ldots\ldots (5)$$

It can be noted that $grant_{comb}$ calculated by Equation (5) satisfies a condition of '$0 \leq grant_{comb} \leq 1$'.

A comparator 1115 compares the $grant_{comb}$ with a threshold $T_{send}$. If the comparison result satisfies a condition of '$grant_{comb} \geq T_{send}$', the comparator 1115 outputs 'grant=1' as a final scheduling grant value. However, if the comparison result satisfies a condition of '$grant_{comb} < T_{send}$', the comparator 1115 outputs 'grant=0' as a final scheduling grant value. Therefore, as the threshold $T_{send}$ is lower, probability that a UE will transmit EUDCH packet is increased higher. The output 'grant' of the comparator 1115 is applied to the EUDCH transmission controller 1102.

In the maximum data rate generator 1120, maximum data rates $Rmax_1$, $Rmax_2$, ..., $Rmax_N$ received from corresponding active Node Bs are multiplied by weighing factors $w_1$, $w_2$, .., $w_N$, respectively, by multipliers 1121, 1122, and 1123, the number of which is also equal to the number of the active Node Bs, and then provided to an adder 1124. The adder 1124 adds up signals output from the multipliers 1121, 1122, and 1123, and outputs Rmax as defined in Equation (6).

$$R\max = \sum_{n=1}^{N} w_n \times R\max_n \qquad \ldots\ldots\ldots (6)$$

The Rmax calculated by Equation (6) is applied to the EUDCH transmission controller 1102. If a particular Node B#m prohibited EUDCH packet transmission, the maximum data rate generator 1120 sets a corresponding $Rmax_m=0$ in calculating the Rmax.

In the above transmission apparatus for a UE, if it is desired to apply a higher weighting factor to scheduling control information of a particular Node B#m, a weighting factor $W_m$ for the particular Node B#m can be increased. When the transmission apparatus illustrated in FIG. 11 is used, in order for EUDCH packet transmission probability of a UE to have a different value for given scheduling control information, a threshold $T_{send}$ can be controlled.

For example, if $T_{send}$ is decreased, EUDCH packet transmission probability is increased, whereas if $T_{send}$ is increased, EUDCH packet transmission probability is decreased. That is, EUDCH packet transmission probability and data rate of a UE for different scheduling commands from the active Node Bs can be controlled by the weighting factors

$w_1$, $w_2$, ..., $w_N$ and the threshold $T_{send}$. The weighting factors can be set to either the same value, or different values. In this embodiment, the sum of weighting factors is limited to 1. However, the sum of weighting factors can also be k. In this case, $T_{send}$ is changed according to a variation in the sum k of the weighting factors, and a scheduling grant value can be generated by performing the above procedure. For the maximum data rate, if the sum of weighting factors is set to k, a calculated data rate can be obtained by dividing the output value of the adder 1124 by k.

FIG. 12 is a flowchart illustrating an operation of a UE performed by the transmission apparatus illustrated in FIG. 11. Referring to FIG. 12, in step 1210, a UE receives scheduling grant values $grant_n$ and maximum allowed data rates $Rmax_n$ from active Node Bs. In step 1212, the UE calculates $grant_{comb}$ using Equation (5). In step 1214, the UE compares the calculated $grant_{comb}$ with a threshold $T_{send}$. If the comparison result satisfies a condition of $grant_{comb} < T_{send}$, the UE does not transmit EUDCH packet. However, if the compassion result satisfies a condition of $grant_{comb} \geq T_{send}$, the UE proceeds to step 1216 where it calculates a maximum allowed data rate Rmax by Equation (6). In step 1218, the UE determines a data rate lower than the Rmax considering a EUDCH buffer status and an allowed delay time. Thereafter, in step 1220, the UE transmits EUDCH packet at the determined data rate.

For an operation of the second embodiment described in connection with FIGs. 11 and 12, an RNC must previously inform the UE of weighting factors $w_1$, $w_2$, ..., $w_N$ for scheduling information of active Node Bs and a threshold $T_{send}$. The $w_1$, $w_2$, ..., $w_N$ and the $T_{send}$ can be transmitted along with an RRC message (e.g., Active Set Update message) transmitted from the RNC to the UE, when the UE enters a soft handover region. Tables 3 and 4 below illustrate an example of a format of an Active Set Update message for transmitting the $w_1$, $w_2$, ..., $w_N$ and the $T_{send}$. In Tables 3 and 4, information parameters added for the second embodiment are italicized.

Table 3

| Information Element/ Group name | Need | Multi | Type and reference | Semantics description |
|---|---|---|---|---|
| Message Type | MP | | Message Type | |
| **UE information elements** | | | | |
| RRC transaction identifier | MP | | RRC transaction identifier 10.3.3.36 | |
| Integrity check info | CH | | Integrity check info 10.3.3.16 | |
| Activation time | MD | | Activation time 10.3.3.1 | Default value is "now". |
| New U-RNTI | OP | | U-RNTI 10.3.3.47 | |
| **CN information elements** | | | | |
| CN information info | OP | | CN Information info 10.3.1.3 | |
| **Phy CH information elements** | | | | |
| **Uplink radio resources** | | | | |
| Maximum allowed UL TX power | MD | | Maximum allowed UL TX power 10.3.6.39 | Default value is the existing "maximum UL TX power. |
| **Downlink radio resources** | | | | |
| Radio link addition information | OP | 1 to <maxRL-1> | | Radio link addition information required for each RL to add |
| >Radio link addition information | MP | | Radio link addition information 10.3.6.68 | |

Table 3 (continued)

| Information Element/ Group name | Need | Multi | Type and reference | Semantics description |
|---|---|---|---|---|
| **Downlink radio resources** | | | | |
| Radio link removal information | OP | 1 to \<maxRL\> | | Radio link removal information required for each RL to remove |
| >Radio link removal information | MP | | Radio link removal information 10.3.6.69 | |
| TX Diversity Mode | MD | | TX Diversity Mode 10.3.6.86 | Default value is the existing TX diversity mode. |
| SSDT information | OP | | SSDT information 10.3.6.77 | |
| ***EUDCH Information*** | | | | |
| *Tsend* | *OP* | | *Real (a 1 ., a2 by step or a3)* | *Threshold information during SHO* |
| *Weighting factor information* | *OP* | *1 to \<maxRL\>* | | *Weighting factor information during SHO* |
| *>Weighting factor information* | *MP* | | *Weighting factor information\** | |

Table 4

| *Weighting factor information* | | | | |
|---|---|---|---|---|
| ***Information Element/Group name*** | ***Need*** | ***Multi*** | ***Type and reference*** | ***Semantics description*** |
| *Primary CPICH info* | *MP* | | *Primary CPICH info 10.3.6.60* | |
| *Weighting factor* | *MP* | | *Real (b 1 .. b2 by step of b3)* | *weighting factor used for combining of scheduling information* |

Third Embodiment

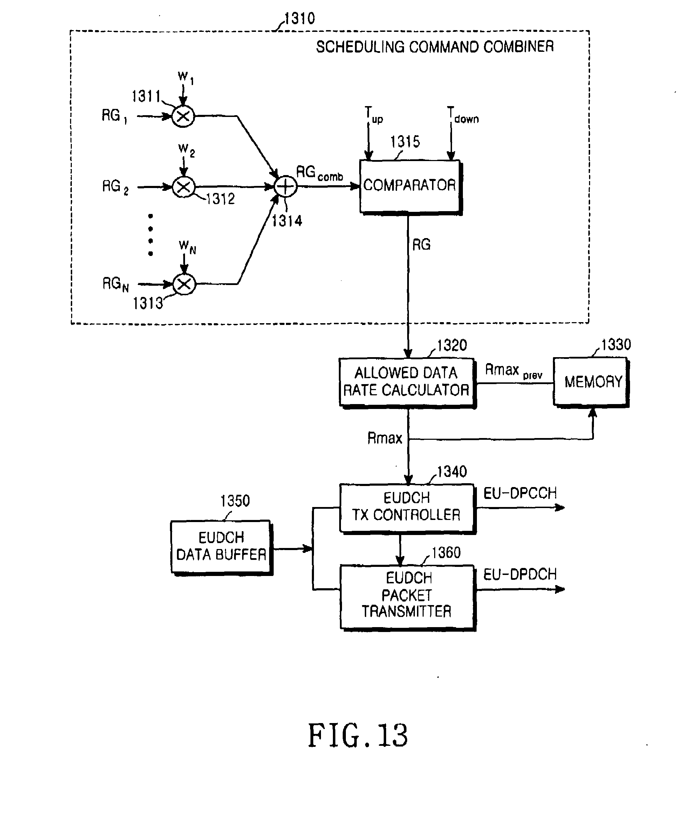

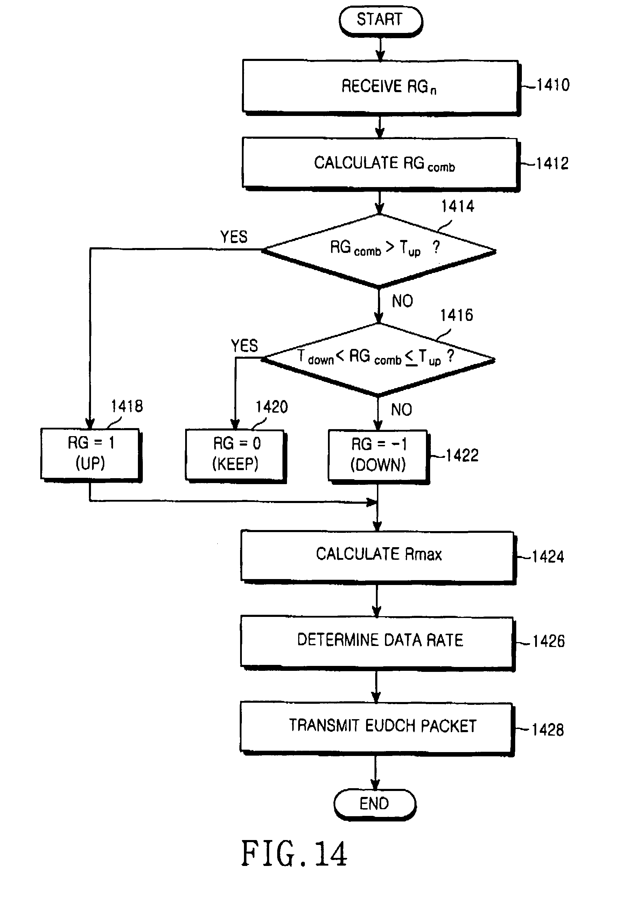

FIG. 13 is a block diagram illustrating yet another example of the scheduling command combiner illustrated in FIG. 8, and FIG. 14 is a flowchart illustrating a control procedure by the scheduling command combiner illustrated in FIG. 13. That is, FIGs. 13 and 14 illustrate an embodiment that can be applied to a system in which a rate grant command indicating up (increase), keep (hold) or down (decrease) of a maximum allowed data rate is transmitted from active Node Bs to a UE as a scheduling command. The UE then increases, maintains, or decreases a maximum allowed data rate according to the rate grant command and transmits EUDCH packet at a data rate below the maximum allowed data rate considering a EUDCH data buffer status and an allowed delay time.

In FIG. 13, a parameter $RG_n$ is a rate grant command transmitted by a Node B#n. For example, $RG_n$=1 represents up of a maximum allowed data rate, $RG_n$=0 represents keep of a maximum allowed data rate, and $RG_n$=-1 represents down of a maximum allowed data rate. A parameter $w_n$ represents a weighting factor for a rate grant command of the Node B#n. Generally, because an increase in a data rate requires higher transmission power, it is possible to inform a UE of up, maintain, or down of maximum allowed transmission power instead of up, maintain, or down of a maximum allowed data rate so that the UE calculates an allowable maximum data rate.

Referring to FIG. 13, a scheduling command combiner 1310 combines scheduling commands, i.e., rate grant commands, received from active Node Bs into one rate grant command RG using weighting factors $w_1$, $w_2$, ..., $w_N$. The weighting factors should satisfy a condition of

$$\sum_{n=1}^{N} w_n = 1$$

The final rate grant command RG is applied to an allowed data rate calculator 1320. The allowed data rate calculator 1320 calculates a new maximum allowed data rate Rmax using a previous maximum allowed data rate $Rmax_{prev}$ stored in a memory 1330 and the final rate grant command RG. For example, when RG=1 or RG=-1, a new maximum allowed data rate Rmax can be calculated by adding or subtracting a predetermined data rate variation to/from the previous maximum allowed data rate $Rmax_{prev}$. When RG=0, the previous maximum allowed data rate $Rmax_{prev}$ can be used as a current maximum allowed data rate Rmax. Controlling of the maximum allowed data rate Rmax can be expressed by Equation (7).

$$Rmax = Rmax_{prev} + RG \times \Delta Rmax \tag{7}$$

In Equation (7), $Rmax_{prev}$ denotes a previous maximum allowed data rate stored in the memory 1330, and $\Delta$Rmax denotes a variation in a maximum allowed data rate, previously known to the UE. After a new Rmax is calculated by Equation (7), the memory 1330 updates the $Rmax_{prev}$ with the newly calculated Rmax.

The newly calculated Rmax is provided to a EUDCH transmission controller 1340. The EUDCH transmitter 1340 determines a EUDCH transport format having a maximum data rate Rmax while considering a status of a EUDCH data buffer 1350. The determined EUDCH transport format is provided to a EUDCH packet transmitter 1360, and at the same time, is transmitted to active Node Bs over UE-DPCCH. The EUDCH packet transmitter 1360 reads a designated amount of data from the EUDCH data buffer 1350, forms EUDCH data according to the EUDCH transport format, and transmits the EUDCH data to the active Node Bs over EU-DPDCH after channel coding and modulation.

In the scheduling command combiner 1310 for calculating a rate grant command RG, multipliers 1311, 1312, and 1313, the number of which is equal to the number of active Node Bs, multiply rate grant commands $RG_1$, $RG_2$, ..., $RG_N$ received from active Node B#1, Node B#2, ..., Node B#N by weighting factors $w_1$, $W_2$, .., $w_N$, respectively, and then provide their outputs to an adder 1314. The adder 1314 adds up signals output from the multipliers 1311, 1312, and 1313, and outputs $RG_{comb}$ as defined in equation (8).

$$RG_{comb} = \sum_{n=1}^{N} w_n \times RG_n \qquad \ldots \ldots \ldots (8)$$

It can be noted that $RG_{comb}$ calculated by Equation (8) satisfies a condition of '-1 :$\leq RG_{comb} \leq 1$'.

The calculated $RG_{comb}$ is provided to a comparator 1315. The comparator 1315 is also provided with $T_{up}$ and $T_{down}$, and compares the $RG_{comb}$ with the $T_{up}$ and $T_{down}$. If the comparison result satisfies a condition of '$RG_{comb} > T_{up}$', the comparator 1315 outputs 'RG=1' as a fmal rate grant message. If the comparison result satisfies a condition of '$T_{down} < RG_{comb} < T_{up}$', the comparator 1315 outputs 'RG=0' as a fmal rate grant message. Finally, if the comparison result satisfies a condition of '$RG_{comb} \leq T_{down}$', the comparator 1315 outputs 'RG=-1' as a final rate grant message. Therefore, as a threshold $T_{up}$ is lower, probability that a UE will increase a maximum allowed data rate is increased higher, whereas as a threshold $T_{down}$ is higher, probability that a UE will decrease a maximum allowed data rate is increased higher. That is, it is possible to control probability that a UE will increase, keep or decrease a maximum allowed data rate according to different rate grant commands from active Node Bs, by controlling the two thresholds $T_{up}$ and $T_{down}$.

The RG output from the comparator 1315 is provided to the allowed data rate calculator 1320 for calculating a new maximum allowed data rate. In the transmission apparatus of a UE illustrated in FIG. 13, if it is desired to apply a higher weighting factor to a scheduling command of a particular Node B#m, a weighting factor $w_m$ for the particular Node B#m can be increased.

FIG. 14 is a flowchart illustrating an operation of a UE performed by the transmission apparatus illustrated in FIG. 13. Referring to FIG. 14, in step 1410, a UE receives rate grant commands $RG_n$ from active Node Bs. In step 1412, the UE calculates $RG_{comb}$ by Equation (8), and then proceeds to step 1414 where it compares the calculated $RG_{comb}$ with $T_{up}$. If the comparison result satisfies a condition of '$RG_{comb} > T_{up}$', the UE sets RG=1 in step 1418. Otherwise, if the comparison result satisfies a condition of '$RG_{comb} \leq T_{up}$', the UE proceeds to step 1416 where it compares the calculated $RG_{comb}$ with $T_{up}$ and $T_{down}$ If the comparison result satisfies a condition of '$T_{down} < RG_{comb} \leq T_{up}$', the UE sets RG=0 in step 1420. However, if the comparison result satisfies a condition of '$RG_{comb} \leq T_{down}$', the UE sets RG=-1 in step 1422. In step 1424, the UE calculates a maximum allowed data rate Rmax by applying the RG set in step 1418, 1420, or 1422 and a previously set RG $Rmax_{prev}$. In step 1426, the UE determines a data rate lower than the calculated Rmax considering a EUDCH buffer status and an allowed delay time. Thereafter, in step 1428, the UE transmits EUDCH packet at the determined data rate. The weighting factors can be set to either the same value, or different values. In this embodiment, the sum of weighting factors is limited to 1. However, the sum of weighting factors can also be k. In this case, $T_{up}$ and $T_{down}$ are changed according to a variation in the sum k of the weighting factors, and an RG message can be generated by performing the above procedure.

For an operation of the third embodiment described in connection with FIGS. 13 and 14, an RNC must previously inform the UE of weighting factors $w_1$, $w_2$, ..., $w_N$ for scheduling information of active Node Bs and thresholds $T_{up}$ and $T_{down}$. The $w_1$, $w_2$, ..., $w_N$ and the $T_{up}$ and $T_{down}$ can be transmitted along with an RRC message (e.g., Active Set Update message) transmitted from the RNC to the UE, when the UE enters a soft handover region. Tables 5 and 6 below illustrate an example of a format of an Active Set Update message for transmitting the $w_1$, $w_2$, ..., $w_N$ and the $T_{up}$ and $T_{down}$. In Tables 5 and 6, information parameters added for the third embodiment are italicized.

Table 5

| Information Element/ Group name | Need | Multi | Type and reference | Semantics description |
|---|---|---|---|---|
| Message Type | MP | | Message Type | |
| **UE information elements** | | | | |
| RRC transaction identifier | MP | | RRC transaction identifier 10.3.3.36 | |
| Integrity check info | CH | | Integrity check info 10.3.3.16 | |
| Activation time | MD | | Activation time 10.3.3.1 | Default value is "now". |
| New U-RNTI | OP | | U-RNTI 10.3.3.47 | |
| **CN information elements** | | | | |
| CN information info | OP | | CN Information info 10.3.1.3 | |
| **Phy CH information elements** | | | | |
| **Uplink radio resources** | | | | |
| Maximum allowed UL TX power | MD | | Maximum allowed UL TX power 10.3.6.39 | Default value is the existing 'maximum UL TX power. |
| **Downlink radio resources** | | | | |
| Radio link addition information | OP | **1** to <maxRL1> | | Radio link addition information required for each RL to add |
| >Radio link addition information | MP | | Radio link addition information 10.3.6.68 | |
| Radio link removal information | OP | 1 to <maxRL> | | Radio link removal information required for each RL to remove |
| >Radio link removal information | MP | | Radio link removal information 10.3.6.69 | |

Table 5 (continued)

| Information Element/ Group name | Need | Multi | Type and reference | Semantics description |
|---|---|---|---|---|
| **Downlink radio resources** | | | | |
| TX Diversity Mode | MD | | TX Diversity Mode 10.3.6.86 | Default value is the existing TX diversity mode. |
| SSDT information | OP | | SSDT information 10.3.6.77 | |
| *EUDCH Information* | | | | |
| *Tup* | *OP* | | *Real (a 1 .. a2 by step of a3)* | *Threshold information during SHO* |
| *Tdown* | *OP* | | *Real (c1 .. c2 by step of c3)* | *Threshold information during SHO* |
| *Weighting factor information* | *OP* | *1 to <maxRL>* | | *Weighting factor information during SHO* |
| *>Weighting factor information* | *MP* | | *Weighting factor information** | |

Table 6

| * Weighting factor information | | | | |
|---|---|---|---|---|
| *Information Element/Group name* | *Need* | *Multi* | *Type and reference* | *Semantics description* |
| *Primary CPICH info* | *MP* | | *Primary CPICH info 10.3.6.60* | |
| *Weighting factor* | *MP* | | *Real (b1 .. b2 by step of b3)* | *weighting factor used for combining of scheduling information* |

As can be appreciated from the foregoing description, although a UE using a EUDCH service in a soft handover region receives different scheduling commands from a plurality of active Node Bs, the EUDCH service can be performed in an optimal radio environment, contributing to improvement in data reception performance.

While the present invention has been shown and described with reference to a certain preferred embodiment thereof, it will be understood by those skilled in the art that various changes in form and details may be made therein without departing from the spirit and scope of the invention as defined by the appended claims.

**Claims**

1. A method for transmitting packet data from a user equipment (UE) to Node Bs in a code division multiple access (CDMA) mobile communication system wherein a plurality of the Node Bs being adjacent to one each another, and the is UE located in the soft handover region occupied by the Node Bs, the method comprising the steps of:

receiving scheduling commands transmitted from the Node Bs;
determining scheduling control information by combining weighted scheduling commands, which are determined considering weighting factors; and
transmitting the packet data to the Node Bs according to the determined scheduling control information,

wherein the weighting factors is determined individually for the scheduling commands.

2. The method of claim 1, wherein each of the plurality of weighting factors is determined considering a physical position and a cell size of each of the Node Bs by a radio network controller (RNC) for managing the Node Bs.

3.   The method of claim 2, wherein as the cell size decreases, a higher weighting factor is applied.

4.   The method of claim 1, wherein the step of determining the scheduling control information comprises the steps of:

comparing a random variable x, which randomly generated within a range between 0 and 1, with a threshold $T_{send}$, which is calculated by

$$T_{send} = 1 - \sum_{n=1}^{N} w_n \times grant_n$$

, where $W_n$ denotes a weighting factor previously determined for each of the scheduling commands, and $grant_n$ denotes packet data transmission allowability of each of the Node Bs;
outputting a final scheduling grant value indicating transmission possibility of the packet data according to the comparison result;
multiplying maximum data rates of the Node Bs, which are provided as the scheduling commands by the weighting factors previously individually determined for the scheduling commands;
adding the maximum data rates multiplied by the weighting factors; and
outputting the addition result as a final maximum data rate.

5.   The method of claim 4, wherein if the random variable x is at least equal to the threshold $T_{send}$, the final scheduling grant value indicates that transmission of the packet data is possible, and if the random variable x is smaller than the threshold $T_{send}$, the final scheduling grant value indicates that transmission of the packet data is impossible.

6.   The method of claim 1, wherein the step of determining the scheduling control information comprises the steps of:

comparing a random variable x, which is randomly generated within a range between 0 and k, with a threshold $T_{send}$, which is calculated by

$$T_{send} = k - \sum_{n=1}^{N} w_n \times grant_n$$

, where $W_n$ denotes a weighting factor previously determined for each of the scheduling commands, and $grant_n$ denotes packet data transmission allowability of each pf the Node Bs;
outputting a fmal scheduling grant value indicating transmission possibility of the packet data according to the comparison result;
multiplying maximum data rates of the Node Bs, which are provided as the scheduling commands by the weighting factors previously individually determined for the scheduling commands;
adding the maximum data rates multiplied by the weighting factors; dividing the addition result by k, which a sum of the weighting factors; and
outputting the division result as a final maximum data rate.

7.   The method of claim 1, wherein the step of determining the ) scheduling control information comprises the steps of:

calculating a combined information bit by multiplying packet data allowability information bits of the Node Bs provided as the scheduling commands by the weighting factors previously, individually determined for the scheduling commands and adding up the multiplication results;
comparing the combined information bit with a random variable x, which is randomly generated within a range between 0 and 1;
outputting a final scheduling grant value indicating transmission possibility of the packet data according to the comparison result;
multiplying maximum data rates of the Node Bs provided as the scheduling commands by the weighting factors previously, individually determined for the scheduling commands;
adding the maximum data rates multiplied by the weighting factors; and

outputting the addition result as a fmal maximum data rate.

8. The method of claim 1, wherein the step of determining the scheduling control information comprises the steps of:

calculating a combined information bit by multiplying packet data allowability information bits of the Node Bs provided as the scheduling commands by the weighting factors previously, individually determined for the scheduling commands and adding up the multiplication results;
comparing the combined information bit with a threshold $T_{send}$, which is provided from a radio network controller (RNC);
outputting a final scheduling grant value indicating transmission possibility of the packet data according to the comparison result;
multiplying maximum data rates of the Node Bs provided as the scheduling commands by the weighting factors previously, individually determined for the scheduling commands;
adding the maximum data rates multiplied by the weighting factors; and
outputting the addition result as a fmal maximum data rate.

9. The method of claim 8, wherein if the combined information bit is at least equal to the threshold $T_{send}$, the final scheduling grant value indicates that transmission of the packet data is possible, and if the combined information bit is lower than the threshold $T_{send}$, the final scheduling grant value indicates that transmission of the packet data is impossible.

10. The method of claim 1, wherein the step of determining the scheduling control information comprises the steps of:

calculating a combined control command bit by multiplying control command bits of the Node Bs provided as the scheduling commands by the weighting factors previously, individually determined for the scheduling commands and adding up the multiplication results;
comparing the combined control command bit with an upper threshold $T_{up}$ and a lower threshold $T_{down}$;
outputting a final control command bit according to the comparison result;
controlling a previously used maximum allowed data rate according to the final control command bit; and
outputting the controlled maximum allowed data rate as a maximum allowed data rate for transmitting the packet data.

11. The method of claim 10, wherein the step of outputting the fmal control command bit comprises the steps of:

outputting the final control command bit for requesting an increase in the previously used maximum allowed data rate, if the combined control command bit is larger than the upper threshold $T_{up}$;
outputting the final control command bit for requesting a hold of the previously used maximum allowed data rate, if the combined control command bit is not larger than the upper threshold $T_{up}$ and is larger than the lower threshold $T_{down}$; and
outputting the final control command bit for requesting a decrease in the previously used maximum allowed data rate, if the combined control command bit is not larger than the lower threshold $T_{down}$

12. The method of claim 10, wherein the weighting factors previously, individually determined for the scheduling commands, the upper threshold $T_{up}$, and the lower threshold $T_{down}$ are provided through a radio resource control (RRC) message from a radio network controller (RNC) for managing the Node Bs.

13. The method of claim 10, wherein a sum of the weighting factors previously, individually determined for the scheduling commands is 1.

14. An apparatus for transmitting packet data from a user equipment (UE) to Node Bs in a code division multiple access (CDMA) mobile communication system, includingwherein a plurality of the Node Bs beingare adjacent to one each another, and the UE is located in the soft handover region occupied by the Node Bs, the apparatus comprising:

a scheduling command combiner for receiving scheduling commands transmitted from the Node Bs, and determining scheduling control information by combining weighted scheduling commands, which are determined considering weighting factors; and
a packet transmitter for transmitting the packet data to the Node Bs according to the scheduling control information

wherein the weighting factors is determined individually for the scheduling commands.

**15.** The apparatus of claim 14, wherein the packet transmitter determines a transport format according to maximum data rate information included in the scheduling control information and a status of a data buffer storing the packet data, and transmits the packet data to the Node Bs according to the transport format, if it is determined from the scheduling control information that transmission of the packet data is possible.

**16.** The apparatus of claim 14, wherein each of the weighting factors is determined by a radio network controller (RNC) that manages the Node Bs, considering a physical position and a cell size of each of the Node Bs.

**17.** The apparatus of claim 16, wherein as the cell size decreases, a higher weighting factor is applied.

**18.** The apparatus of claim 14, wherein the scheduling command combiner comprises:

a scheduling grant value generator for (i) comparing a random variable x, which is randomly generated within a range between 0 and 1, with a threshold $T_{send}$, which is calculated by

$$T_{send} = 1 - \sum_{n=1}^{N} w_n \times grant_n$$

, where $w_n$ denotes a weighting factor previously determined for each of the scheduling commands, and $grant_n$ denotes packet data transmission allowability of each of the Node Bs, and (ii) outputting a final scheduling grant value indicating transmission possibility of the packet data according to the comparison result; and a maximum data rate generator for multiplying maximum data rates of the Node Bs, which are provided as the scheduling commands by the weighting 5 factors previously, individually determined for the scheduling commands, adding the maximum data rates multiplied by the weighting factors, and outputting the addition result as a fmal maximum data rate.

**19.** The apparatus of claim 18, wherein the scheduling grant value 0 generator outputs the fmal scheduling grant value indicating that transmission of the packet data is possible, if the random variable x is at least equal to the threshold $T_{send}$, and outputs the final scheduling grant value indicating that transmission of the packet data is impossible, if the random variable x is smaller than the threshold $T_{send}$. 5

**20.** The apparatus of claim 14, wherein the scheduling command combiner comprises:

a scheduling grant value generator for comparing a random variable x, which is randomly generated within a range between 0 and k, with a threshold $T_{send}$, which is calculated by

$$T_{send} = k - \sum_{n=1}^{N} w_n \times grant_n$$

, where $w_n$ denotes a weighting factor previously determined for each of the scheduling commands, and $grant_n$ denotes packet data transmission allowability of each of the Node Bs, and outputting a final scheduling grant value indicating transmission possibility of the packet data according to the comparison result; and a maximum data rate generator for multiplying maximum data rates of the Node Bs, which are provided as the scheduling commands by the weighting factors previously, individually determined for the scheduling commands, adding the maximum data rates multiplied by the weighting factors, dividing the addition result by k, and outputting the division result as a final maximum data rate.

**21.** The apparatus of claim 14, wherein the scheduling command combiner comprises:

a scheduling grant value generator for calculating a combined information bit by multiplying packet data allowability information bits of the Node Bs, which are provided as the scheduling commands by the weighting factors previously, individually determined for the scheduling commands, adding the addition results, comparing the combined information bit with a random variable x, which is randomly generated within a range between 0 and 1, and outputting a fmal scheduling grant value indicating transmission possibility of the packet data according to the comparison result; and

a maximum data rate generator for multiplying maximum data rates of the Node Bs, which are provided as the scheduling commands by the weighting factors previously, individually determined for the scheduling commands, adding the maximum data rates multiplied by the weighting factors, and outputting the addition result as a fmal maximum data rate.

22. The apparatus of claim 14, wherein the scheduling command combiner comprises:

a scheduling grant value generator for calculating a combined information bit by multiplying packet data allowability information bits of the Node Bs, which are provided as the scheduling commands by the weighting factors previously, individually determined for the scheduling commands, adding the multiplication results, comparing the combined information bit with a threshold $T_{send}$ provided from a radio network controller (RNC), and outputting a final scheduling grant value indicating transmission possibility of the packet data according to the comparison result; and

a maximum data rate generator for multiplying maximum data rates of the Node Bs, which are provided as the scheduling commands by the weighting factors previously, individually determined for the scheduling commands, adding the maximum data rates multiplied by the weighting factors, and outputting the addition result as a final maximum data rate.

23. The apparatus of claim 22, wherein the scheduling grant value generator outputs the final scheduling grant value for indicating that transmission of the packet data is possible, if the combined information bit is at least equal to the threshold $T_{send}$, and outputs the final scheduling grant value for indicating that transmission of the packet data is impossible, if the combined information bit is lower than the threshold $T_{send}$.

24. The apparatus of claim 14, wherein the scheduling command combiner comprises:

a plurality of multipliers for multiplying control command bits of the Node Bs, which are provided as the scheduling commands by the weighting factors previously, individually determined for the scheduling commands;

an adder for adding the control command bits multiplied by the weighting factors, and outputting a combined control command bit; and

a comparator for comparing the combined control command bit with an upper threshold $T_{up}$ and a lower threshold $T_{down}$, and outputting a final control command bit according to the comparison result.

25. The apparatus of claim 24, further comprising:

a memory for storing a maximum allowed data rate used for transmitting previous packet data; and

an allowed data rate calculator for reading the previously used maximum allowed data rate from the memory, controlling the previously used maximum allowed data rate according to the final control command bit, and outputting a final allowed data rate for transmitting the packet data.

26. The apparatus of claim 25, wherein the comparator (i) outputs the final control command bit for requesting an increase in the previously used maximum allowed data rate, if the combined control command bit is larger than the upper threshold $T_{up}$, (ii) outputs the final control command bit for requesting a hold of the previously used maximum allowed data rate, if the combined control command bit is not larger than the upper threshold $T_{up}$ and is larger than the lower threshold $T_{down}$, and (iii) outputs the final control command bit requesting a decrease in the previously used maximum allowed data rate, if the combined control command bit is not larger than the lower threshold $T_{down}$.

27. The apparatus of claim 24, wherein the weighting factors previously, individually determined for the scheduling commands, the upper threshold $T_{up}$, and the lower threshold $T_{down}$ are provided through a radio resource control (RRC) message from a radio network controller (RNC) for managing the Node Bs.

28. The apparatus of claim 24, wherein a sum of the weighting factors previously, individually determined for the scheduling commands is 1.

29. A method for applying at least one of a plurality of weighting factors for each of a plurality of cells by a radio network controller (RNC) that manages the plurality of cells so that a user equipment (UE) located in a soft handover region can transmit packet data according to scheduling commands from the plurality of cells considering the weighting factors, in a code division multiple access (CDMA) mobile communication system, wherein a plurality of the cells are adjacent to each other, and the UE is located in the soft handover region occupied by the cells, the method comprising the steps of:

calculating each of the plurality of weighting factors to be in inverse proportion to a radius $r_i$ of each of the plurality of cells and to be in proportion to a particular value k defined

$$\sum_{i=1}^{N} k/r_i = 1$$

, where N denotes a number of the cells; and
transmitting the weighting factors individually calculated for the cells to the UE through a radio resource control (RRC) message.

30. The method of claim 29, wherein a weighting factor for a particular cell is calculated as a quotient obtained by dividing the particular value k by the radius $r_i$ of the particular cell.

31. A method for applying a weighting factor for a cell by a radio network controller (RNC) that manages a plurality of cells so that a user equipment (UE) located in a soft handover region can transmit packet data according to scheduling commands from the plurality of cells considering a plurality of weighting factors, in a code division multiple access (CDMA) mobile communication system, wherein a plurality of the cells are adjacent to each other, and the UE is located in the soft handover region occupied by the cells, the method comprising the steps of:

receiving from the UE a path loss $\gamma_i$, which is determined according to a strength of a common pilot signal measured for each of the plurality of cells;
calculating the plurality of weighting factors to be in inverse proportion to the path loss $\gamma_i$ of each of the plurality of cells and to be in proportion to a particular value k defined by

$$\sum_{i=1}^{N} k/\gamma_i = 1$$

1, where N denotes a number of the cells; and
transmitting the weighting factors individually calculated for each of the plurality of cells to the UE through a radio resource control (RRC) message.

32. The method of claim 31, wherein a weighting factor for a particular cell is calculated as a quotient obtained by dividing the particular value k by the path loss $\gamma_i$ measured for the particular cell.

FIG.1

EP 1 447 938 A2

FIG.2

FIG.3A

FIG.3B

FIG.4

FIG.5

**FIG.6**

705

RNC

702

NODE B2

UL EUDCH PACKET
TRANSMISSION

701

SCHEDULING COMMAND
FROM NODE B2

703

NODE B1

SCHEDULING COMMAND
FROM NODE B1

NODE B3

SCHEDULING COMMAND
FROM NODE B3

704

FIG.7

FIG.8

FIG.9

START

RECEIVE $\text{grant}_n$ AND $\text{Rmax}_n$ FROM ACTIVE NODE Bs — 1010

CALCULATE THRESHOLD $T_{send}$ — 1012

[0,1) GENERATE RANDOM VARIABLE x HAVING RANDOM DISTRIBUTION — 1014

1016

$X \geq T_{send}$ ?

NO

YES

CALCULATE Rmax — 1018

DETERMINE DATA RATE — 1020

TRANSMIT EUDCH PACKET — 1022

END

FIG. 10

FIG.11

```
                    ┌─────────┐
                    │  START  │
                    └────┬────┘
                         │
         ┌───────────────▼──────────────┐
         │  RECEIVE grant_n AND Rmax_n   │──── 1210
         └───────────────┬──────────────┘
                         │
         ┌───────────────▼──────────────┐
         │     CALCULATE grant_comb      │──── 1212
         └───────────────┬──────────────┘
                         │              1214
                    ◇────▼────◇
        NO         ◇ grant_comb ≥ T_send ? ◇
      ┌───────────◇                    ◇
      │            ◇────┬────◇
      │                 │ YES
      │    ┌────────────▼───────────┐
      │    │     CALCULATE Rmax      │──── 1216
      │    └────────────┬───────────┘
      │                 │
      │    ┌────────────▼───────────┐
      │    │   DETERMINE DATA RATE   │──── 1218
      │    └────────────┬───────────┘
      │                 │
      │    ┌────────────▼───────────┐
      │    │  TRANSMIT EUDCH PACKET  │──── 1220
      │    └────────────┬───────────┘
      │                 │
      └─────────────────┤
                        ▼
                   ┌─────────┐
                   │   END   │
                   └─────────┘
```

**FIG. 12**

FIG.13

START

RECEIVE $RG_n$ —1410

CALCULATE $RG_{comb}$ —1412

1414

$RG_{comb} > T_{up}$ ?

YES

NO

1416

$T_{down} < RG_{comb} \leq T_{up}$ ?

YES

NO

1418

RG = 1
(UP)

1420

RG = 0
(KEEP)

RG = −1
(DOWN) —1422

CALCULATE Rmax —1424

DETERMINE DATA RATE —1426

TRANSMIT EUDCH PACKET —1428

END

FIG.14